# EUROPÄISCHE PATENTSCHRIFT

(11) **EP 2 170 668 B1**
(45) Veröffentlichungstag und Bekanntmachung des Hinweises auf die Patenterteilung: **03.08.2011**
(21) Anmeldenummer: 08761196.8
(22) Anmeldetag: 19.06.2008
(51) Int. Cl.: B60T 10/02, F16D 57/04

(54) **HYDRODYNAMISCHER RETARDER MIT TANGENTIALEM ZU- UND ABSTRÖMPRINZIP**
HYDRODYNAMIC RETARDER WITH A TANGENTIAL INFLOW AND OUTFLOW PRINCIPLE
RETARDATEUR HYDRODYNAMIQUE FONCTIONNANT SELON LE PRINCIPE D'ARRIVÉE ET D'ÉCOULEMENT DE FLUX TANGENTIELS

(30) Priorität: 25.07.2007 DE 102007034562
(43) Veröffentlichungstag der Anmeldung: 07.04.2010
(73) Patentinhaber: ZF Friedrichshafen AG, 88038 Friedrichshafen (DE)
(72) Erfinder: MEID, Thomas, 88693 Deggenhausertal (DE); HUBER, Michael, 88085 Langenargen (DE); ULMER, Andreas, 88074 Meckenbeuern (DE)
(86) Internationale Anmeldenummer: PCT/EP2008/057750
(87) Internationale Veröffentlichungsnummer: WO 2009/013083

(56) Entgegenhaltungen:
- DE-A1- 4 446 287
- DE-A1- 19 807 277
- DE-C2- 4 010 970
- DE-C2- 4 420 204

## Beschreibung

Die vorliegende Erfindung bezieht sich auf einen hydrodynamischen Retarder mit tangentialem Zu- und Abströmprinzip gemäß dem Oberbegriff des Patentanspruchs 1.

Bei hydrodynamischen Retardern wird die Strömungsenergie einer Flüssigkeit zum Bremsen benutzt, wobei das physikalische Wirkprinzip dem einer hydrodynamischen Kupplung mit feststehender Turbine entspricht. Demnach weist ein hydrodynamischer Retarder einen sich im Leistungsfluss befindlichen Rotor und einen mit dem Retardergehäuse fest verbundenen Stator auf. Beim Betätigen des Retarders wird eine der gewünschten Bremsleistung entsprechende Ölmenge in den Schaufelraum eingebracht, wobei der drehende Rotor das Öl beschleunigt und an den Stator übergibt. Hierdurch wird eine Bremswirkung auf die Rotorwelle erzeugt.

Aus dem Stand der Technik sind Retarder bekannt, bei denen eine Verstelleinrichtung vorgesehen ist, über die das Statorschaufelrad in eine außermittige Lage zum Rotorschaufelrad verschwenkbar ist.

Beispielsweise ist aus der DE 44 20 204 C2 ein hydrodynamischer Retarder mit einem feststehenden, mit Arbeitsflüssigkeit füllbaren Gehäuse bekannt, umfassend ein mit einer Antriebswelle verbundenes drehbares Rotorschaufelrad und ein Statorschaufelrad, welches in eine außermittige Lage zum Rotorschaufelrad verschwenkbar ist und exzentrisch und schwenkbar auf einer, in Einbaulage parallel zur Rotorschaufelradachse angeordneten Längsachse gelagert ist. Hierbei ist die Lagerachse in Einbaulage in einem Bereich angeordnet, welcher durch den Außendurchmesser des Rotorschaufelrades begrenzt ist; das Statorschaufelrad ist frei von zusätzlichen Verstelleinrichtungen zur Realisierung der Schwenkbewegung, sodass jeweils beim Entleervorgang ein selbsttätiges Verschwenken aufgrund der Gewichtskraft und beim Füllvorgang aufgrund eines lmpulsaustausches zwischen Rotor- und Statorschaufelrad entstehenden Kräftepaares entgegen der Gewichtskraft erfolgt. Im Bremsbetrieb nehmen Rotor und Stator im wesentlichen eine koaxiale Lage zueinander an.

Des weiteren ist bei dem bekannten Retarder wenigstens ein Anschlag vorgesehen, welcher die Schwenkbewebung des Statorschaufelrades beim Füllvorgang spätestens beim Erreichen einer maximalen Überdeckung zwischen Rotor- und Statorradbeaufschlagung begrenzt, wobei das Statorschaufelrad gegenüber dem Rotorschaufelrad im entleerten Zustand derart angeordnet ist, dass wenigstens ein Teil der Beschaufelung des Statorschaufelrades die Beaufschlagung des Rotorschaufelrades überdeckt.

Aus der DE 4010970 C2 ist hydrodynamischer Retarder mit einem feststehenden Gehäuse, das mit Arbeitsflüssigkeit füllbar ist, bekannt, mit einem mit der Antriebswelle verbundenen drehbaren Rotorschaufelrad und einem nicht rotierenden Statorschaufelrad, das gegenüber dem Rotorschaufelrad in eine exzentrische Lage verstellbar ist und mit einer Verstelleinrichtung zum Verstellen des Statorschaufelrades. Die Verstelleinrichtung ist hierbei einseitig mit Druckmittel beaufschlagbar wodurch das Statorschaufelrad in die exzentrische Lage verschwenkbar ist.

Bei hydrodynamischen Retardern mit tangentialem Zu- und Abströmprinzip wird das zuströmende Medium bei Teilfüllung, d.h. bei einer Füllung mit einer geringen Ölmenge, durch den tangentialen Auslass unmittelbar entleert, ohne wieder den hydrodynamischen Kreislauf zu schließen. Um eine geringe Änderung des Bremsmoments zu erzielen, ist in einem derartigen Betriebsbereich eine große Änderung des dazugehörigen Steuerdrucks notwendig.

Nimmt der Grad der Füllung des Retarders weiter zu, so wird der hydrodynamische Kreislauf ab einem bestimmten Füllgrad geschlossen, wobei bei geschlossenem Kreislauf nur geringe Steuerdruckänderungen für große Bremsmomentänderungen erforderlich sind.

Somit entstehen bei hydrodynamischen Retardern mit tangentialem Zu- und Abströmprinzip zwei unterschiedliche Betriebsbereiche, wobei am Übergang zwischen beiden Bereichen eine Instabilität gegeben ist, was zu starken Schwankungen des Bremsmomentes führt, da in diesem Betriebspunkt ein ständiger Wechsel zwischen geschlossenem und offenem hydrodynamischen Kreislauf stattfindet.

Der vorliegenden Erfindung liegt die Aufgabe zugrunde, einen hydrodynamischen Retarder mit tangentialem Zu- und Abströmprinzip anzugeben, bei dem die Instabilität zwischen den beiden Betriebebereichen weitgehend vermieden wird.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein hydrodynamischer Retarder mit tangentialem Zu- und Abströmprinzip vorgeschlagen, bei dem auch bei Teilfüllung in Teilbereichen ein geschlossener Kreislauf entsteht.

Dadurch wird ein tangentiales Abströmen des Mediums in diesen Teilbereichen eingeschränkt, ohne jedoch das Funktionsprinzip des tangentialen Abströmens zu gefährden. Dies resultiert wiederum in der Vermeidung der instabilen Betriebsbereiche.

Gemäß der Erfindung wird dies dadurch erreicht, dass der Rotor eine vorgegebene, nicht verstellbare Exzentrizität gegenüber dem Stator aufweist, so dass der radiale Spalt zwischen den Bauteilen Rotor und Stator durch die erfindungsgemäße Exzentrizität über den Umfang variabel ist, wodurch in Teilbereichen des Retarders ein geschlossener Kreislauf entsteht, da das Öl in diesem Fall nicht abströmen kann.

Die Erfindung wird im folgenden anhand der beigefügten Figuren beispielhaft näher erläutert. Es zeigen:
- Figur 1:: Eine schematische Darstellung einer ersten Ausführungsform der Erfindung;
- Figur 2:: Eine schematische Darstellung einer zweiten Ausführungsform der Erfindung;
- Figur 3:: Eine schematische Darstellung einer' dritten Ausführungsform der Erfindung; und
- Figur 4:: Eine Schnittansicht eines gemäß der Erfindung ausgebildeten hydrodynamischen Retarders.

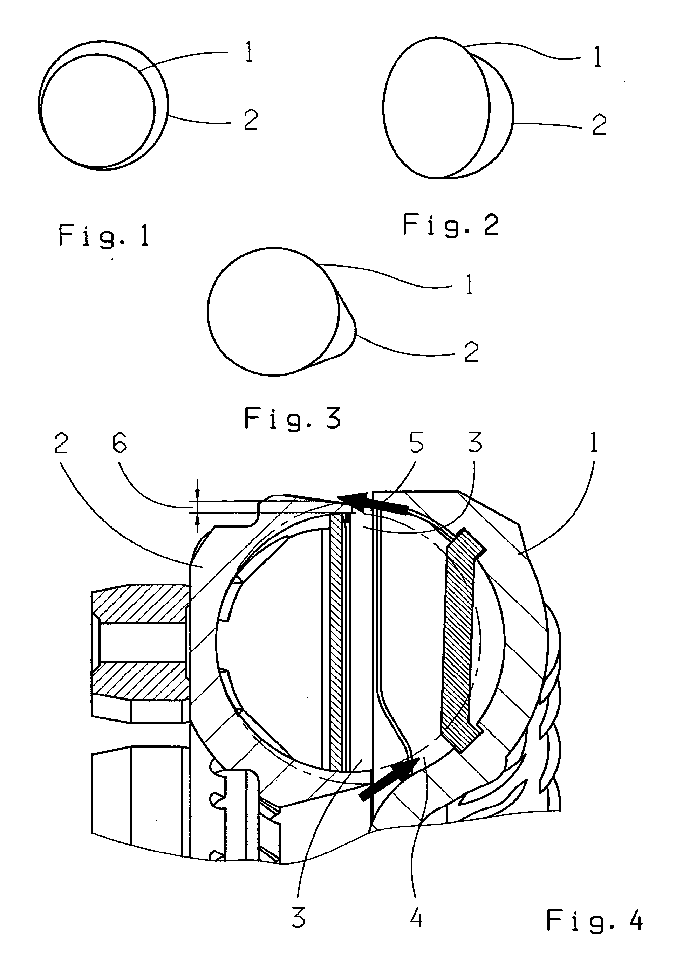

In Figur 1 ist eine mögliche Ausführungsform eines erfindungsgemäßen hydrodynamischen Retarders dargestellt. Hierbei sind Rotor 1 und Stator 2 exzentrisch zueinander gelagert. Durch diese Konzeption kann der Austrittsspalt zwischen dem Rotor 1 und dem Stator 2 vergrößert oder verkleinert werden, so dass auch bei extremer Teilfüllung in bestimmten Bereichen ein geschlossener Kreislauf realisiert werden kann und die Strömung des Öls an dem Auslass vorbeigeleitet wird, wodurch ein tangentiales Abströmen des Öls verhindert wird.

Bei der in Figuren 2 und 3 gezeigten Ausführungsformen wird dies dadurch erreicht, dass der Rotor 1 und/oder der Stator 2 alternativ oder zusätzlich zur exzentrischen Lagerung eine von der Kreisform abweichende Geometrie aufweisen. Beispielsweise kann der Rotor 1 und/oder der Stator 2 elliptisch ausgebildet sein.

In Figur 4 ist der Laufspalt zwischen Rotor 1 und Stator 2 mit 3 bezeichnet. Bei dem gezeigten hydrodynamischen Retarder mit tangentialem Zu- und Abströmprinzip fließt das Öl in Pfeilrichtung über den Einlass 4 in den Retarder ein, wobei ein Abströmen des Öls über den Auslass 5 in Pfeilrichtung erfolgt. Wie aus Figur 4 zu entnehmen ist, ist der radiale Austrittsspalt 6 zwischen den Bauteilen Rotor 1 und Stator 2 durch die erfindungsgemäße Exzentrizität über den Umfang variabel, so dass in Teilbereichen des Retarders ein geschlossener Kreislauf entsteht, da das Öl in diesem Fall nicht abströmen kann.

### Bezugszeichen

- 1: Rotor
- 2: Stator
- 3: Laufspalt
- 4: Einlass
- 5: Auslass
- 6: Austrittsspalt

## Patentansprüche

1. Hydrodynamischer Retarder mit tangentialem Zu- und Abströmprinzip, **dadurch gekennzeichnet, dass** der Rotor (1) eine nicht verstellbare vorgegebene Exzentrizität gegenüber dem Stator (2) aufweist.

2. Hydrodynamischer Retarder mit tangentialem Zu- und Abströmprinzip, nach Anspruch 1, **dadurch gekennzeichnet, dass** Rotor (1) und Stator (2) exzentrisch zueinander gelagert sind.

3. Hydrodynamischer Retarder mit tangentialem Zu- und Abströmprinzip, nach Anspruch 2, **dadurch gekennzeichnet, dass** der Rotor (1) und/oder der Stator (2) alternativ oder zusätzlich zur exzentrischen Lagerung eine von der Kreisform abweichende Geometrie aufweisen.

4. Hydrodynamischer Retarder mit tangentialem Zu- und Abströmprinzip, nach Anspruch 3, **dadurch gekennzeichnet, dass** der Rotor (1) und/oder der Stator (2) elliptisch ausgebildet sind.

## Claims

1. Hydrodynamic retarder with a tangential inflow and outflow principle, **characterized in that** the rotor (1) has non-adjustable predetermined eccentricity with respect to the stator (2).

2. Hydrodynamic retarder with a tangential inflow and outflow principle, according to Claim 1, **characterized in that** the rotor (1) and the stator (2) are mounted eccentrically with respect to one another.

3. Hydrodynamic retarder with a tangential inflow and outflow principle, according to Claim 2, **characterized in that** the rotor (1) and/or the stator (2) have, alternatively or additionally to the eccentric mounting, a geometry which deviates from the circular form.

4. Hydrodynamic retarder with a tangential inflow and outflow principle, according to Claim 3, **characterized in that** the rotor (1) and/or the stator (2) are of elliptical design.

## Revendications

1. Retardateur hydrodynamique fonctionnant selon le principe d'écoulement d'apport et de sortie tangentiel, **caractérisé en ce que** le rotor (1) présente une excentricité prédéfinie non réglable par rapport au stator (2).

2. Retardateur hydrodynamique fonctionnant selon le principe d'écoulement d'apport et de sortie tangentiel selon la revendication 1, **caractérisé en ce que** le rotor (1) et le stator (2) sont montés de manière excentrée l'un par rapport à l'autre.

3. Retardateur hydrodynamique fonctionnant selon le principe d'écoulement d'apport et de sortie tangentiel selon la revendication 2, **caractérisé en ce que** le rotor (1) et/ou le stator (2) présentent, en variante ou en plus du support sur palier excentrique, une géométrie s'écartant de la forme circulaire.

4. Retardateur hydrodynamique fonctionnant selon le principe d'écoulement d'apport et de sortie tangentiel selon la revendication 3, **caractérisé en ce que** le rotor (1) et/ou le stator (2) sont réalisés sous forme elliptique.
